# EUROPEAN PATENT APPLICATION

(11) **EP 4 721 912 A1**
(43) Date of publication of application: **08.04.2026**
(21) Application number: 25205052.1
(22) Date of filing: 26.09.2025
(51) Int. Cl.: B23P 6/00, B23P 9/02, B22F 7/06, B22F 7/08, B22F 10/25, B22F 10/38, B22F 10/50, B22F 10/80, B22F 12/10, B22F 12/90, B23K 26/342, B23K 26/00, B23K 26/346, B23K 26/60, B23K 28/02, B33Y 10/00, B33Y 30/00, B33Y 40/00, B33Y 50/00, F01D 5/00

(54) **APPARATUS AND RELATED METHODS FOR REPAIRING MACHINE PARTS USING A HYBRID PRE-HEATING SYSTEM**

(30) Priority: 26.09.2024 US 202418897953
(71) Applicant: RTX Corporation, Farmington, CT 06032 (US)
(72) Inventor: EL-WARDANY, Tahany, Vernon, 06066 (US); MANTESE, Joseph V., Ellington, 06029 (US); ASARE, Ted A., Glastonbury, 06033 (US); MASTRANGELO, Christopher Robert, Medford, 02155 (US); BABIEC, Henry, Farmington (US)
(74) Representative: Dehns

(57) **Abstract**

A repair system repairs a part by pre-heating a surface of the part (22) before beginning the repair process. An inspection system coupled to the repair system identifies a region of interest having damage on the part (22). A pre-heating system (1600) is used to heat the surface of the part (22) in the region of interest using a uniform heating induction coil (1608) and a localized heating induction coil (1610) to generate heat. The surface of the part (20) is heated to a temperature. A metallic powder (1604) is deposited on the pre-heated surface and worked using a deep rolling process to repair the part (22).

## Description

### FIELD OF THE INVENTION

The subject matter disclosed herein relates to an apparatus and related methods to repair parts. In particular, the subject matter disclosed herein relates to repairing parts using a hybrid directed energy deposition (DED) and electrical assisted deep rolling process by implementing a pre-heating system.

### BACKGROUND OF THE INVENTION

Melting base processes have been used for repair of many materials, especially aerospace materials. Some nickel-base materials, however, may not easily be repaired due to their hot or cold cracking sensitivity. MAR-M-247 may be a good castability superalloy due to the addition of hafnium (Hf) that shows excellent creep and oxidation properties due to the high gamma prime (γ') volume fraction of > 60% and a high content of refractory elements. MAR-M-247, however, may be difficult to repair due to its sensitivity to hot cracking during welding due to its high Al and Ti content. The high gamma prime (γ') may make it difficult to weld due to its high cracking susceptibility in the heat affected zone (HAZ) during welding.

To enhance the repairability of MAR-M-247, an electron beam melting (EBM) process may be used to build or repair MAR-M-247 high-gamma prime superalloys. The EBM process, however, is less sensitive to crack formation due to its high process temperatures and the high degree of flexibility in beam deflection and focusing.

It may be appreciated that a need exists for a repair process of part having MAR-M-247 that considers the sensitivity to hot cracking.

### SUMMARY OF THE INVENTION

The present disclosure is directed, in a first aspect, to a method for repairing a part using a hybrid pre-heated directed energy deposition (DED) and deep rolling process. The method includes identifying a region of interest of the part. The method also includes pre-heating the region of interest using a pre-heating system having at least one induction coil to generate heat at a temperature by applying power to the at least one induction coil and positioning the pre-heating system at the region of interest. The method also includes depositing a metallic powder at the pre-heated region of interest. The method also includes solidifying and fusing the metallic powder into a layer with a directed energy deposition to define the part. The method also includes deep rolling the solidified layer of the metallic powder to obtain a desired microstructure.

In additional examples, the at least one induction coil includes a uniform heating induction coil and a localized heating induction coil. The localized heating induction coil receives variable power to vary the temperature of the heat. In alternative embodiments, the at least one induction coil includes a uniform heating induction coil or a localized heating induction coil. The uniform heating induction coil may be coupled to a fixed power source. The localized heating induction coil is coupled to a variable power source. A frequency, the power, or a position of the uniform heating induction coil is varied. A frequency, the power, or a position of the localized heating induction coil is varied.

In additional examples, the method also includes pre-heating the solidified layer of the metallic powder prior to depositing a subsequent amount of the metallic powder.

In additional examples, the method also includes scanning the part with a scanner of the inspection system. The method also includes determining the region of interest based on damage detected using a model of the scanned part.

In additional examples, the metallic powder includes an MAR-M-247 alloy material.

In yet another aspect, the present disclosure is directed to a method for repairing a part having damage. The method includes scanning the part using a scanning process to generate a scanned model. The scanned model indicates the damage to the part. The method also includes comparing the scanned model to an original model of the part to indicate a region of interest on the part having the damage. The method also includes identifying the region of interest on the part within the inspection system. The method also includes placing the part in a repair system having a deep rolling tool. The method also includes pre-heating the region of interest using a pre-heating system of the repair system having at least one induction coil to generate heat at a temperature by applying power to the at least one induction coil and positioning the pre-heating system at the region of interest. The method also includes depositing a metallic powder at the pre-heated region of interest. The method also includes solidifying and fusing the metallic powder into a layer with a directed energy deposition to define the part. The method also includes deep rolling using the deep rolling tool to work the solidified layer of the metallic powder to obtain desired microstructure.

In additional examples, the at least one induction coil includes a uniform heating induction coil and a localized heating induction coil. The localized heating induction coil receives variable power to vary the temperature of the heat.

In additional examples, the at least one induction coil includes a uniform heating induction coil or a localized heating induction coil. The uniform heating induction coil may be coupled to a fixed power source. The localized heating induction coil may be coupled to a variable power source.

In additional examples, the metallic deposition material is a nickel alloy. The nickel alloy may include a MAR-M-247 alloy.

In yet another examples, the present disclosure is directed to a system to repair a part. The system includes a repair system to repair the part on a surface at the region of interest. The system also includes a pre-heating system of the repair system having at least one induction coil to generate heat at a temperature on the surface at the region of interest. The system also includes a material depositor to deposit an amount of metallic powder on the pre-heated surface of the part at the region of interest. The system also includes an energy directing device of the repair system to solidify and fuse the amount of the metallic powder into a layer with a directed energy deposition to define the part. The system also includes a machine tool to deep roll the solidified layer of the amount of the metallic powder to obtain a desired microstructure.

In additional examples, the at least one induction coil includes a uniform heating induction coil to generate a fixed amount of heat for the temperature provided by the pre-heating system. The at least one induction coil also includes a localized heating induction coil to generate a variable amount of heat for the temperature provided by the pre-heating system.

In additional examples, the metallic powder includes a MAR-M-247 alloy powder.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Figure 1 illustrates a block diagram of a system for repairing a part according to the disclosed embodiments.
Figure 2 illustrates a block diagram of a control system for an inspection system according to the disclosed embodiments.
Figure 3 illustrates a flowchart for inspecting a part that is performed by the control system of the inspection system according to the disclosed embodiments.
Figure 4 illustrates a flowchart for a feedback driven scan configured to be performed by the control system according to the disclosed embodiments.
Figure 5 illustrates a diagrammatic representation of a hybrid machine DED/deep rolling assembly embodiment of a multi-axis powered machine according to the disclosed embodiments.
Figure 6 illustrates a diagrammatic representation of a deep rolling tool according to the disclosed embodiments.
Figure 7 illustrates a schematic representation of a system according to the disclosed embodiments.
Figure 8 illustrates a block diagram of a pre-heating system for use with the system according to the disclosed embodiments.
Figure 9 illustrates a flowchart for using the pre-heating system according to the disclosed embodiments.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to the use of hybrid directed energy deposition (DED) and an electrical assisted deep rolling process for repairing MAR-M-247 material. The hybrid DED and pre-heated deep rolling process may repair aerospace materials that are difficult to repair using traditional methods based on the MAR-M-247 nickel-based material. The disclosed embodiments promote the reduction of hot cracking where pre-heating is applied during deposition and deep rolling processes.

The disclosed embodiments implement a localized heat induction coil to be held close to the area to be repaired. The induction pre-heating system includes thermocouples and a thermocouple thermometer data device for use in applications requiring a broad range of temperatures. The thermocouple device may measure temperatures in Celsius that range from - 177 degrees to +1300 degrees Celsius. The data device provides the relative time of minimum, maximum, and average temperature measurements for monitoring conditions for compliance with regulations.

The disclosed embodiments provide a hybrid 5-axis CNC milling machine that deposits MAR-M-247 alloy powder with pre-heating of 1100 degrees Celsius. Each deposited layer on the sections that require repairs is deep rolled at the temperature of 1100 degrees Celsius. Process parameters may control the cooling rate and prevent any reduction in the gamma prime (γ'). The repaired surface may be machined and cleaned. A pre-heating system is provided that is used to heat the damaged areas. The DED path that is generated earlier may be loaded to the machine and the laser head. The machine spindle will get the rolling tool holder with the roller from the machine tool magazine to start the deep rolling of the deposited layer at 120 rotations-per-minute (RPM) roller feed. The deep rolling parameters may be identified from finite element (FE) models. The deposition distance is set according to the disclosed embodiments and the number of layers defined based on the defined volume of material. After finishing the deposition process for all the repaired areas, the spindle will select the deep rolling tool and then a milling tool for machining the deposited areas.

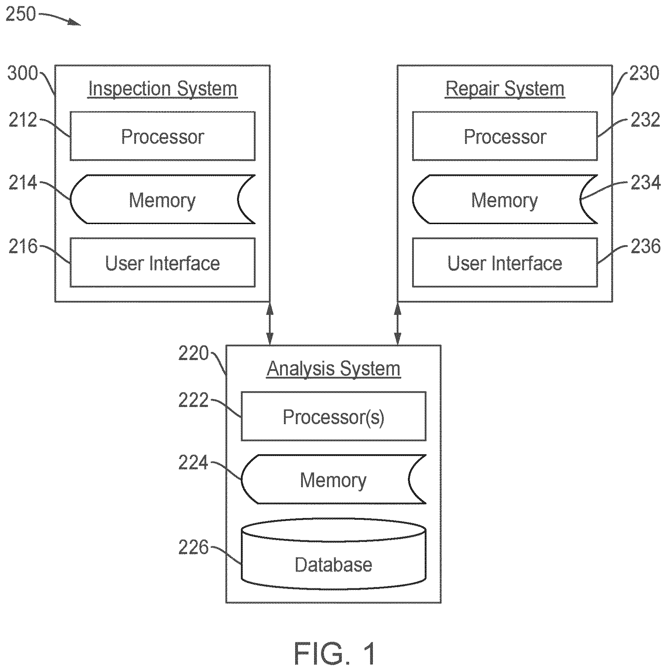

Figure 1 depicts a block diagram of a system 250 for repairing a part according to the disclosed embodiments. System 250 includes an inspection system 300, an analysis system 220, and a repair system 230. Although illustrated as separate systems with separate processors (e.g., processors 212, 222, 232), the present disclosure is not limited in this regard. For example, the system 250 may include a single processor, a single memory, and a single user interface and still remain within the scope of this disclosure.

Similarly, although inspection system 300 and repair system 230 are illustrated as separate systems with separate processors, memories and user interfaces, the present disclosure is not limited in this regard. For example, inspection system 300 and repair system 230 may be combined into a single system that communicates with analysis system 220, in accordance with various embodiments.

Analysis system 220 may include one or more processors 222. In this regard, analysis system 220 may be configured to process a significant amount of data. Analysis system 220 may be configured for remote computing (e.g., cloud-based computing), or the like. Thus, a processing time and a volume of data analyzed may be greatly increased relative to typical repair systems, in accordance with various embodiments.

Inspection system 300, analysis system 220, and repair system 230 each include a computer system comprising a processor (e.g., processor 212, processor(s) 222, and/or processor 232) and a memory (e.g., memory 214, memory 224, memory 234). Inspection system 300 and repair system 230 may each comprise a user interface (UI) (e.g., UI 216, UI 236). In various embodiments, inspection system 201 and repair system 230 may utilize a single user interface to control both systems. The present disclosure is not limited in this regard.

Analysis system 220 may further comprise a database 226. In various embodiments, the database 226 comprises various stored data for use by analysis system 220. The database 226 may include the original part CAD model or an inspected part database (e.g., with data from various prior inspected parts), a repair data database (e.g., with data from original or various prior repairs performed/approved), a load data database (e.g., with engine load data from structural and/or aerodynamic analysis), a test data database (e.g., with engine specific test data used for validation of structural and/or aerodynamic analysis), a design data database (e.g., with design models having nominal dimensions according to a product definition), and/or a material data database (e.g., with material for each component), in accordance with various embodiments.

System 250 may be configured for inspecting, analyzing, and repairing a part, in accordance with various embodiments. In this regard, the repair process for the part may be fully automated, in accordance with various embodiments, as described further herein.

In various embodiments, and as shown in Figure 1, systems 220, 230, and 300 may each store a software program configured to perform the methods described herein in a respective memory 214, 224, and 234 and run the software program using the respective processor 212, 222, and 232. The systems 220, 230, and 300 may include any number of individual processors 212, 222, and 232 and memories 214, 224, and 234. Various data may be communicated between the systems 220, 230, and 300 and a user via the user interfaces (e.g., UI 216, UI 236). Such information may also be communicated between the systems 220, 230, and 300 and external devices, database 226, and/or any other computing device connected to the systems 220, 230, and 300 (e.g., through any network such as a local area network (LAN), or wide area network (WAN) such as the Internet).

For systems 220, 230, and 300 depicted in Figure 1, each processor 212, 222, and 232 may retrieve and executes instructions stored in the respective memories 214, 224, and 234 to control the operation of the respective systems 220, 230, and 300. Any number and type of processor(s) (e.g., an integrated circuit microprocessor, microcontroller, and/or digital signal processor (DSP)), can be used in conjunction with the various embodiments. The processors 212, 222, and 232 may include, and/or operate in conjunction with, any other suitable components and features, such as comparators, analog-to-digital converters (ADCs), and/or digital-to-analog converters (DACs). Functionality of various embodiments may also be implemented through various hardware components storing machine-readable instructions, such as application-specific integrated circuits (ASICs), field-programmable gate arrays (FPGAs) and/or complex programmable logic devices (CPLDs).

The memories 214, 224, and 234 may include a non-transitory computer-readable medium (such as on a CD-ROM, DVD-ROM, hard drive or FLASH memory) storing computer-readable instructions stored thereon that can be executed by the processors 212, 222, and 232 to perform the methods of the present disclosure. The memories 214, 224, and 234 may include any combination of different memory storage devices, such as hard drives, random access memory (RAM), read only memory (ROM), FLASH memory, or any other type of volatile and/or nonvolatile memory.

The systems 230 and 300 may receive and display information via a respective user interface (e.g., UI 236 or UI 216). The user interfaces (e.g., UI 236 or UI 216) include various peripheral output devices (such as monitors and printers), as well as any suitable input or control devices (such as a mouse and keyboard) to allow users to control and interact with the software program.

In various embodiments, inspection system 300 and repair system 230 may each be in electronic communication with analysis system 220, directly or via a respective user interface (e.g., UI 236 or UI 216). Inspection system 300 and repair system 230 may comprise any suitable hardware, software, and/or database components capable of sending, receiving, and storing data. For example, inspection system 300 or repair system 230 may comprise a personal computer, personal digital assistant, cellular phone, smartphone (e.g., those running UNIX-based and/or Linux-based operating systems such as IPHONE^{®}, ANDROID^{®}, and/or the like), loT device, kiosk, and/or the like. Inspection system 300 or repair system 230 may comprise an operating system, such as, for example, a WINDOWS^{®} mobile operating system, an ANDROID^{®} operating system, APPLE^{®} IOS^{®}, a LINUX^{®} operating system, and the like. Inspection system 300 or repair system 230 may also comprise software components installed on inspection system 300 or repair system 230 and configured to enable access to various system 250 components. For example, inspection system 300 or repair system 230 may comprise a web browser (e.g., MICROSOFT INTERNET EXPLORER^{®}, GOOGLE CHROME^{®}, APPLE SAFARI^{®} etc.), an application, a micro-app or mobile application, or the like, configured to allow inspection system 300 or repair system 230 to access and interact with analysis system 220.

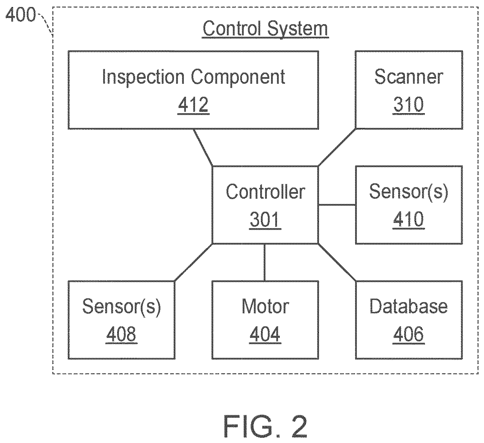

Figure 2 depicts a block diagram of a control system 400 for inspection system 300 according to the disclosed embodiments. In various embodiments, control system 400 for inspection system 300 comprises controller 301, tracking 3D scanner 310, a memory 402, a motor 404, a database 406, and sensor(s) 408, sensor(s) 410, and inspection component 412.

In various embodiments, the inspection component 412 comprises rollers for the curved track, a conveyor belt for the vertical track, and/or a holder coupled to tracking 3D scanner 310. In various embodiments, the inspection component 412 comprises only a holder. In various embodiments, the inspection component 412 comprises only the rollers for a curved track and the conveyor belt or linkages for a vertical track. The present disclosure is not limited in this regard. In various embodiments, the inspection component 412 is stationary and the part being inspected is moveable along three-axis, five-axis, or the like.

In various embodiments, the tracking 3D scanner 310 comprises a coordinate measuring machine (CMM), a mechanical scanner, a laser scanner, a structured scanner (e.g., a white light scanner, a blue light scanner, etc.), a non-structured optical scanner, a non-visual scanner (e.g., computed tomography), or the like. In various embodiments, the tracking 3D scanner 310 is a blue light scanner. In various embodiments, the tracking 3D scanner 310 may be swapped with another scanner at any point during an inspection step. In various embodiments, the inspection system 300 may be configured to swap the tracking 3D scanner 310 with a different scanner during the inspection step.

A "blue light scanner" as disclosed herein refers to a non-contact structure light scanner. The blue light scanner may have a scan range of between 100×75 mm² in accordance with various embodiments. In various embodiments, an accuracy of the blue light scanner may be between 0.005 and 0.015 mm. In various embodiments, the blue light scanner may be secured by a machine spindle. The machine spindle may facilitate the part's movement in the x-, y- and z- directions and rotation in the clockwise and counterclockwise directions so as to facilitate generating the CAD model. With the assistance of the machine spindle, the blue light scanner may be able to determine distances between adjacent points in the point cloud of between 0.04 and 0.16 mm as measured across three axes. In various embodiments, a volume accuracy of the blue light scanner may be approximately 0.8 mm/m. In various embodiments, a scan depth may be between approximately 100 and 400 mm.

In various embodiments, the blue light scanner may comprise a light source including a blue LED. In this regard, the blue light scanner may be configured to emit an average wavelength between 400 and 450 nm, in accordance with various embodiments. Although described with various specifications herein, the blue light scanner is not limited in this regard, and one skilled in the art may recognize the parameters of the blue light scanner may extend outside the exemplary ranges. Use of a blue light scanner provides a high-resolution point cloud for a three-dimensional object.

The controller 301 may be integrated into computer system of the inspection system 300, such as in processor 212 and/or memory 214 from Figure 1. In various embodiments, the controller 301 may be configured as a central network element or hub to various systems and components of the control system 400. In various embodiments, controller 301 may comprise a processor (e.g., processor 212). In various embodiments, controller 301 may be implemented as a single controller (e.g., via a single processor 212 and associated memory 214). In various embodiments, controller 301 may be implemented as multiple processors (e.g., a main processor and local processors for various components). The controller 301 can be a general-purpose processor, a digital signal processor (DSP), an application specific integrated circuit (ASIC), a field programmable gate array (FPGA) or other programmable logic device, discrete gate or transistor logic, discrete hardware components, or any combination thereof.

The controller 301 may comprise a processor configured to implement various logical operations in response to execution of instructions, for example, instructions stored on a non-transitory, tangible, computer-readable medium configured to communicate with the controller 301. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

In various embodiments, the motor 404 of the control system 400 is operably coupled to the shaft of the control system 400. In various embodiments, the motor 404 may comprise a direct current (DC) stepper, an alternating current (AC) motor or the like. The present disclosure is not limited in this regard. In various embodiments, the sensor(s) 408 include Hall effect sensor(s), optical sensor(s), resolver(s), or the like. In various embodiments, sensor(s) 408 may include sensor(s) configured to detect an angular position of the shaft 308 during an inspection step for a part. In this regard, during inspection of the part, the controller 301 receives sensor data from the sensor(s) 408. The controller 301 can utilize the sensor data received from the sensor(s) 408 to correlate an angular position of the part being inspected with a location of the tracking 3D scanner 310 as described further herein. In various embodiments, in an application with spindle arrangements, the part may remain stationary throughout an inspection process. Thus, coordinates of the holder may be determined via sensor(s) 408 in a similar manner to orient and construct the part being inspected as described further herein.

In various embodiments, the sensor(s) 410 are configured to detect a position of the tracking 3D scanner 310. In this regard, sensor(s) 410 may be position sensors (e.g., capacitive displacement sensors, eddy-current sensors, Hall effect sensors, inductive sensors, optical sensors, linear variable differential transformer (LVDT) sensors, photodiode array sensors, piezoelectric sensors, encoders, potentiometer sensors, ultrasonic sensors or the like). The present disclosure is not limited in this regard. Thus, during inspection of the part, controller 301 is able to determine a location of the tracking 3D scanner 310 and an angular position of the part throughout the inspection. Thus, based on the location of the tracking 3D scanner 310, an angular location of the part and scanning data received from the tracking 3D scanner 310, a digital map (e.g., a robust point cloud) can be generated for the part being inspected. In various embodiments, the point cloud encompasses the entire part (e.g., between 95% and 100% of a surface area of the part, or between 99% and 100% of the surface area of the part).

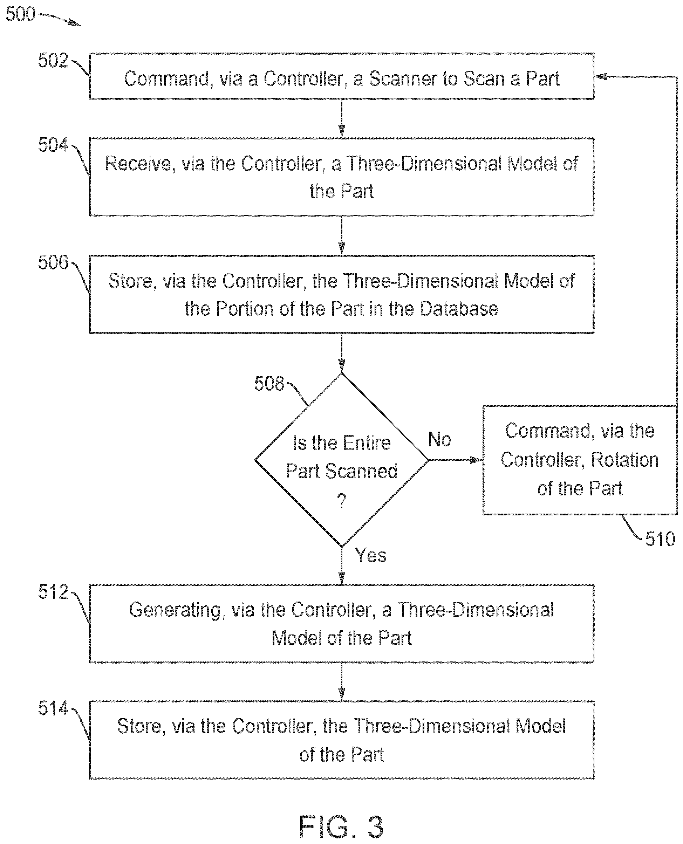

Figure 3 depicts a flowchart 500 for inspecting a part that is performed by control system 400 of inspection system 300 according to the disclosed embodiments. In various embodiments, flowchart 500 comprises commanding, via controller 301 and tracking 3D scanner 310 to scan a part (step 502). In some embodiments, the part may be a workpiece.

In various embodiments, commanding the tracking 3D scanner 310 in step 502 may further comprise commanding rollers of the curved track, commanding a conveyor belt or linkages of the vertical track or the like in conjunction with scanning via the tracking 3D scanner 310. In this regard, the controller 301 may provide a predetermined toolpath for the tracking 3D scanner 310 to scan the portion of the part, in accordance with various embodiments. However, the present disclosure is not limited in this regard, for example, step 502 may include commanding a scanner coupled to a holder to scan a portion of the part, or may include commanding a five-axis system to orient the part for scanning, or the like. Thus, step 502 may include any command to position the part being inspected relative to a scanner and scanning the part, in accordance with various embodiments.

Flowchart 500 further comprises receiving, via controller 400, a three-dimensional model of the part (step 504). In various embodiments, the three-dimensional model is a digital map (e.g., a point cloud). In this regard, in response to utilizing a CMM scanner or a structured light scanner, the tracking 3D scanner 310 measures discrete points of surfaces of the portion of the part being scanned and transmits the discrete points to the controller 301. In various embodiments, the point cloud may be relative to a datum defined by the inspection system 300. In this regard, a datum for the inspection system 300 may be defined in the memory (e.g., memory 214). In various embodiments, the datum is a center point of the part. Thus, the controller 301 is configured to determine a location of each point scanned via the tracking 3D scanner 310 based on the datum, a location of the tracking 3D scanner 310 when a scan occurs during step 502 from sensor(s) 410, measurement data from the tracking 3D scanner 310, and an angular position of the part from sensor(s) 408.

Flowchart 500 further comprises storing, via the controller 301, the three-dimensional model in a database 406 (step 506). Although described herein as intermittently storing scanned portions of the part, the present disclosure is not limited in this regard. For example, the tracking 3D scanner 310 may scan the entire part prior to transmitting the three-dimensional model to the controller 301 and still be within the scope of this disclosure. In this regard, the controller 301 may be configured to determine an amount of the part that has been scanned based on the angular position of the part and the position of the tracking 3D scanner 310 throughout step 502.

Flowchart 500 further comprises determining whether the part has been scanned in its entirety (e.g., between 95% and 100% or between 99% and 100% or approximately 100%). In this regard, the flowchart 500 may determine whether the tracking 3D scanner 310 has performed a scan at each predetermined arc angle (e.g., 1 degree, 3 degrees, 5 degrees, or the like) and a total angular rotation of the part for the scanning process has reached 360 degrees.

If the entire part has not been scanned, flowchart 500 further comprises commanding, via the controller 301, rotation of the part a fixed amount (e.g., 1 degree, 3 degrees, 5 degrees, 10 degrees, etc.). The present disclosure is not limited in this regard. The controller 301 may command the motor 404 to rotate the part by the fixed amount, in accordance with various embodiments.

In various embodiments, steps 502, 504, 506, and 508 are repeated until the entire part is scanned according to step 508, at which point flowchart 500 further comprises generating, via controller 301, a three-dimensional model of the part (step 512). In this regard, in response to the tracking 3D scanner 310 being a CMM scanner or a structured light scanner, the controller 301 may stitch together the point clouds for each portion of the part scanned via step 502 to generate a robust point cloud of the entire part (e.g., between 95% and 100% of an external surface area of the part, or between 99% and 100% of the external surface area of the part, or approximately 100% of the external surface area of the part). In various embodiments, the entire part refers to approximately 100% of an external surface area of all the part.

In various embodiments, flowchart 500 further comprises storing, via the controller 301, the three-dimensional model of the part in the database 406. In this regard, the three-dimensional model may be utilized for analyzing the inspected part, determining a repair for the inspected part and/or in repairing the inspected part.

In various embodiments, flowchart 500 may provide a fully automated solution for generating a robust three-dimensional model (e.g., a point cloud) for an inspected part, in accordance with various embodiments.

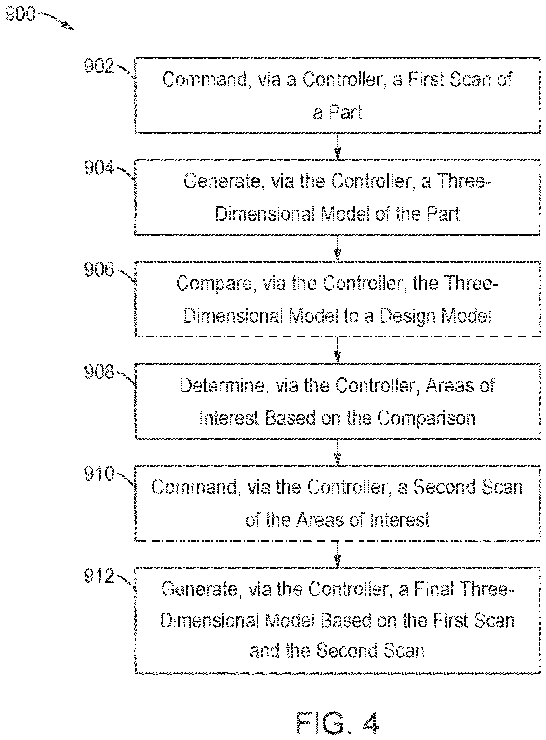

Figure 4 depicts a flowchart 900 for a feedback driven scan configured to be performed by control system 400 according to the disclosed embodiments.

The process disclosed by flowchart 900 comprises commanding, via the controller 301, a first scan of a part, or workpiece (step 902). The first scan of the bladed rotor may be in accordance with flowchart 500 as disclosed above. In various embodiments, the first scan may be performed with a scanner configured to produce a quicker, lower density point cloud (e.g., a CMM). In this regard, the first scan of the bladed rotor may be considered a high-level initial scan of the bladed rotor, in accordance with various embodiments.

The process disclosed by flowchart 900 further comprises generating, via the controller 301, a three-dimensional model (e.g., a point cloud) of the part based on the first scan (step 904), and comparing, via the controller 301, the three-dimensional model to a design model for the part being inspected (step 906). Although described herein with respect to comparing to a design model, the present disclosure is not limited in this regard. For example, the database 406 of the control system 400 may have various inspected part point clouds stored therein. In various embodiments, the various inspected parts with point clouds in the database 406 may include designations (i.e., approved without repairs or the like). In this regard, the comparing step 906 may utilize previously approved inspected part point clouds to compare the three-dimensional model generated from the first scan in step 904.

The process disclosed by flowchart 900 further comprises determining, via the controller 301, areas of interest on the bladed rotor based on the comparison in step 906 (step 908). Although described herein as the controller 301 determining the areas of interest, the present disclosure is not limited in this regard. For example, the controller 301 may be configured to transmit the digital data through an application-based software infrastructure that stores data on remote servers and may be configured for determining areas of interests of the part (i.e., via cloud-based computing or the like), in accordance with various embodiments. For example, with brief reference to Figure 1, the controller 301 may transmit the digital data to analysis system 220 (e.g., via a WAN such as the Internet). Analysis system 220 may perform analysis based on the three-dimensional model generated from the first scan in step 902. Analysis system 220 may output areas of interest to inspection system 300, in accordance with various embodiments. In this regard, controller 301 may receive, via the processor, areas of interest on the part after transmitting the digital data to a cloud-based computing software instead of performing steps 906 and 908 of flowchart 900 and still be within the scope of this disclosure.

In various embodiments, the comparing and determining of steps 906 and 908 of flowchart 900 may be performed by manual processes. For example, fluorescent penetrant inspection (FPI) may be performed manually on the part. In response to performing the FPI, a person may determine areas of interest of the part and input coordinates of the respective areas of interest into the processor (e.g., via a graphical user interface (GUI) or the like). In this regard, the process of flowchart 900 may include receiving, from a GUI, areas of interest for the part based on performing FPI or any other manual inspection process, in accordance with various embodiments.

In some embodiments, based on the sensor data received from the first scan in step 902, and described previously herein with respect to flowchart 500, the process disclosed by flowchart 900 further comprises commanding, via the controller 301, a second scan of the areas of interest determined from step 908 (step 910). In various embodiments, the second scan may include multiple scans with the scanner used for the first scan (e.g., in response to the tracking 3D scanner 310 being a CMM and having only a single scanner configuration). In various embodiments, the second scan may be performed with a higher resolution scanner (e.g., a structured light scanner). In this regard, a first tracking 3D scanner 310 may comprise a CMM scanner configured to perform step 902 of process disclosed by flowchart 900, and a second tracking 3D scanner 310 may comprise a structured light scanner configured to perform step 910 of process 900, or a structured light scanner with a more optimal focal length for a higher resolution image of a detailed area of the part. In various embodiments, the second scan may be performed after swapping out a first scanner with a second scanner (e.g., for an inspection system 300 with a single scanner configuration). In this regard, a CMM scanner used for step 902 may be swapped out with a structured light scanner prior to performing the second scan, in accordance with various embodiments. In various embodiments, the inspection system 300 may be configured to automatically swap the scanners (e.g., in a similar manner to a spindle of a Computer Numerical Control (CNC) machine swapping out one machining tool for another). The present disclosure is not limited in this regard.

The process disclosed by flowchart 900 further may comprise generating, via the controller 301, a final three-dimensional model based on the first scan and the second scan (step 912). In this regard, a point density in the areas of interest may be significantly greater than a point density outside the areas of interest, in accordance with various embodiments. In various embodiments, the process disclosed by flowchart 900 facilitates efficient scanning of bladed rotors with a focus on achieving high definition of potential problem areas (e.g., defects or the like). In this regard, by inputting the point cloud developed from the process disclosed by flowchart 900 into an analysis system, a margin of safety relative to any defect areas may be reduced, in accordance with various embodiments.

Mechanical surface treatments, such as "deep rolling process", are being used to enhance the surface strength and /or subsurface of a metallic substrate. The term "deep rolling" refers to a surface rolling treatment using rolls applied with force with the purpose of inducing deep plastic deformations and compressive residual stresses in near-surface layers of the substrate. This process is in contrast to a process often referred to as "roller burnishing" which is usually applied with much lower forces or pressures and mostly aims to obtain a compressive residual stress with low plastic strain and certain surface quality especially in terms of roughness.

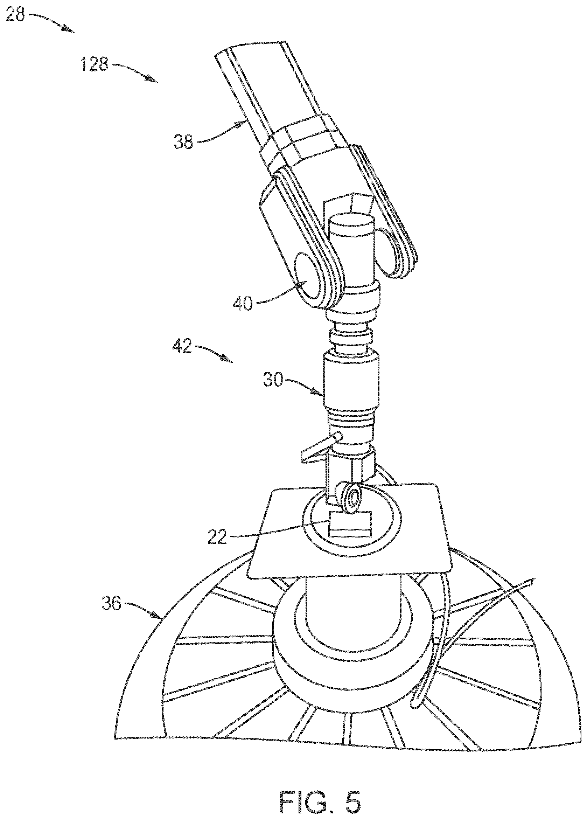

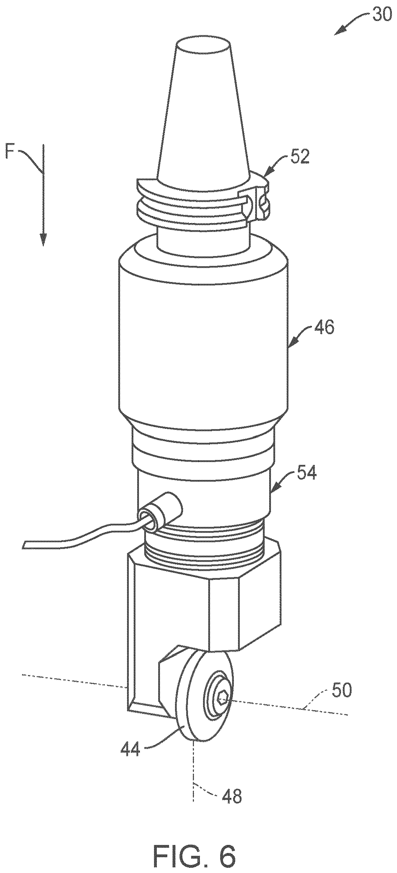

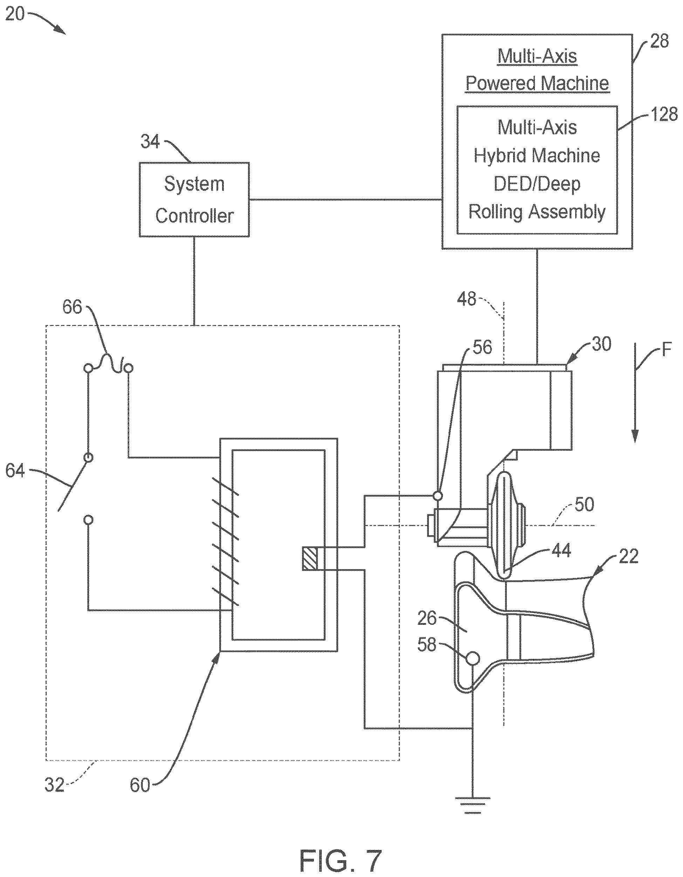

Figure 5 depicts a diagrammatic representation of a hybrid machine DED/deep rolling assembly embodiment of a multi-axis powered machine according to the disclosed embodiments. Figure 6 depicts a diagrammatic representation of a deep rolling tool according to the disclosed embodiments. Figure 7 depicts a schematic representation of a system according to the disclosed embodiments. Referring to Figures 5-7, system 20 includes a multi-axis powered machine 28, a deep rolling tool 30, and an electrical assist unit 32. In some embodiments, system 20 may include a system controller 34.

In some embodiments, the multi-axis powered machine 28 may be configured to hold and actuate the deep rolling tool 30 in multiple degrees of freedom relative to a stationary workpiece 22. The multi-axis powered machine 28 may be configured to operate in two or more axes of motion; e.g., up to twelve axes of motion that include multiple axes of translation, multiple axes of rotation, and the like. In some embodiments, a multi-axis powered machine 28 may be configured to hold and actuate a part, shown as workpiece 22, in multiple degrees of freedom relative to a stationary deep rolling tool 30. The roller of the deep rolling tool can be made from tool steel, or tungsten carbide materials, or the like.

A non-limiting example of a multi-axis hybrid CNC powered machine 28 that may be a multi-axis hybrid machine DED/deep rolling assembly 128 is diagrammatically shown in Figure 5. Hybrid machine DED/deep rolling assemblies typically include a base 36 connected to plurality of arms 38 connected in series by multi-axis joints 40. The arms 38 extend collectively extend from the base 36 to a working end 42 where a tool, an actuator, or other implement may be attached. The degrees of movement for hybrid machine DED/deep rolling assembly 128 may be a function of the number of arms 38 and joints 38 possessed by the assembly 128. A multi-axis hybrid machine DED/deep rolling assembly 128 may, for example, be configured to hold and apply a deep rolling tool 30 (attached to the working end 42) relative to a stationary workpiece 22 in multiple axes of orientation and translation. Conversely, a hybrid machine DED/deep rolling assembly 128 may be configured to hold and apply a workpiece 22 relative to a stationary deep rolling tool 30 in multiple axes of orientation and translation. The above examples of multi-axis powered machines 28 may be described as a unitary device.

In some embodiments, the multi-axis powered machine 28 may comprise a plurality of machine components that operate in coordinated fashion to achieve multi-axis application of a deep rolling tool 30. For example, a first multi-axis powered machine component may be configured to hold one of a workpiece 22 or a deep rolling device and is capable of movement (i.e., rotational or translational) in a first set of axes and a second multi-axis powered machine component may be configured to hold the other of the workpiece 22 or deep rolling device and is capable of movement (i.e., rotational or translational) in a second set of additional axes. Collectively, the first and second multi-axis powered machine components make it possible to apply the deep rolling tool 30 to the workpiece 22 in a collective number of axes (first plus second set of axes) greater than that possible with either multi-axis powered machine component individually. In these embodiments, the plurality of machine components may include a machine tool and a hybrid machine DED/deep rolling assembly, or a pair of assemblies, or the like.

The deep rolling tool 30 may assume a variety of different configurations, some including a single roller 44 and others including a plurality of rollers 44. A non-limiting example of a deep rolling tool 30 is diagrammatically shown in Figure 6. This deep rolling tool 30 embodiment has a shaft assembly 46 extending along a central axis 48 and a roller 44 disposed at the distal end of the shaft assembly 46, rotatably mounted on an axis 50 that is disposed perpendicular to the central axis 48. In some embodiments, a roller 44 may be retained within a holder and configured to roll relative to that holder rather than an axle. The present disclosure is not limited to any particular roller 44 mounting configuration or orientation. The shaft assembly 46 may be a rigid assembly or the roller 44 may be spring mounted.

Deep rolling tool 30 may be translated in a direction parallel to the central axis 48 to apply the roller 44 against a workpiece 22 with a normal force. The deep rolling tool 30 is shown with optional elements including a tool holder 52 mounted to a proximal end of the shaft assembly 46 and a load cell 54. The tool holder 52 is configured to facilitate attachment of the deep rolling tool 30 to the working end 42 of the hybrid machine DED/deep rolling assembly 128. The load cell 54 may be configured to measure the force applied by the roller 44 against a workpiece 22. The load cell 54 may be in communication with a system controller 34 by wired and/or wireless connection. The present disclosure is not limited to any particular deep rolling tool 30 configuration.

The one or more rollers 44 may comprise a material having a hardness greater than the hardness of the workpiece 22 being processed. A non-limiting example of a roller 44 material may be a hardened steel alloy, or a carbide such as a tungsten carbide, or the like. The present disclosure is not limited to any particular roller 44 material. The one or more rollers 44 may be configured in a variety of different geometric configurations. For example, a roller 44 may be a body having a rotational axis; e.g., a spherical roller, a cylindrical roller, a crowned roller, a disk-like roller, or the like. The present disclosure is not limited to any roller 44 geometric configuration.

The electrical assist unit 32 is configured to selectively apply a pulsed electrical current ("electro-pulsed" current) to the workpiece 22 simultaneously with a plastic deformation process applied to the workpiece 22; e.g., deep rolling as will be described herein. The electro- pulsed current may be pulsed direct current (DC) or may be pulsed alternating current (AC). In those applications that use electro-pulsed AC, the AC current is typically at very high frequency and magnitude. The electrical assist unit 32 can be controlled to selectively apply an amount of electrical current to the workpiece 22 sufficient to create an electroplastic effect (EPE) at the surface and within the near surface of the workpiece 22 during the plastic deformation process, while reducing the required normal force. The EPE may be described as a reduction in flow stress and an increase in plasticity (which may be collectively referred to as a reduction in deformation resistance) that occurs with the application of electrical current to the workpiece 22. To be clear, the application of electrical current to a metallic workpiece 22 will produce some amount of Joule heating which itself may produce an increase in ductility.

The mechanical property changes in the metallic workpiece 22 are not solely attributable to Joule heating but rather are also attributable to an additional independent mechanism (i.e., EPE) understood to be related to interaction between moving electrons and dislocations within the metallic material. The EPE, therefore, is understood to be independent of and decoupled from Joule heating. The reduction in deformation resistance associated with EPE when used with deep rolling is understood to refine the grain structure of the metal at the surface and within the near- surface region with an increase in dislocation sources and tangles associated with increased dislocation mobility. The refined grain structure and increased dislocation sources and tangles, in turn, result in an increased amount of residual compressive stress at the surface and within the near-surface regions. The increased amount of residual compressive stress produces enhanced fatigue strength; e.g., by inhibiting small crack initiation and/or propagation. Both deep rolling alone and deep rolling with electrical assist produced EPE result in some amount of work hardening at the surface and near-surface regions of a workpiece 22. However, deep rolling with electrical assist produced EPE is understood to produce a refined grain structure that extends deeper into the metal near-surface, and an increased amount of dislocation sources and tangles at the surface and that extends deeper into the metal near-surface relative to that produced by deep rolling alone.

The electrical assist unit 32 may be configured to apply the electrical current to the metallic workpiece 22 in a variety of different ways. In some embodiments, the electrical assist unit 32 may be configured to directly apply the electrical current to the metallic workpiece 22: e.g., by directly connecting the metallic workpiece 22 to the electrical current source. In some embodiments, the electrical assist unit 32 may be configured to produce an electrical current within the metallic workpiece 22 in a contactless manner; e.g., by inducing an electrical current within the workpiece 22 using an applied magnetic field.

Regarding those embodiments wherein the electrical assist unit 32 is configured to directly apply the electrical current to the metallic workpiece 22, as shown diagrammatically in Figure 7, the electrical assist unit 32 may include a first electrical connection 56 to the deep rolling tool 30 and a second electrical connection 58 to the metallic workpiece 22. The first electrical connection 56 between the deep rolling tool 30 and the workpiece 22 may be through the roller 44 or may be through a contact device associated with the deep rolling tool 30 that is in contact with the workpiece 22.

The second electrical connection 58 may be an electrical lead that is directly attached to the workpiece 22 or connected to an element in electrical communication with the workpiece 22. The present disclosure is not limited to any particular type of first or second electrical connection 56 or 58. The electrical assist unit 32 diagrammatically shown in Figure 7 includes a transformer 60, a capacitor bank 62, a switch 64, and an AC power source 66. The electrical assist unit 32 is configured to form an electrical circuit with the metallic workpiece 22 being connected to ground. The present disclosure is not limited to this particular electrical circuit embodiment. The electrical current may be applied in a pulsed form, hut the present disclosure is not limited to pulsed current application.

The system controller 34 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components.

The system controller 34 may include or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The system controller 34 may include, or may be in communication with, an input device that enables a user to enter data and/or instructions, and may include, or be in communication with, an output device configured, for example to display information (e.g., a visual display), or to transfer data, etc. Communications between the system controller 34 and other system components may be via a hardwire connection or by wireless connection.

The present disclosure system 20 may be used to process newly formed components, or may be used to produce new components, or may be used in the repair of existing components. Figure 7 diagrammatically illustrates a workpiece 22 engaged with a deep roller tool 30 and in communication with an electrical assist unit 32. The workpiece 22 may be a newly formed component, or it may be a used component that has been repaired, which repair included a new surface portion.

The hybrid machine DED/deep rolling assembly 128 and the electrical assist unit 32 may be in communication with a system controller 34. The electrical assist unit 32 may be controlled (e.g., using stored instructions executed by the controller) to produce pulsed electrical current applied to the workpiece 22 at predetermined parameters such as current density, pulse frequency, and pulse duration. At the same time, the hybrid machine DED/deep rolling assembly 128 is controlled (e.g., using stored instructions executed by the controller) to apply the roller 44 of the deep rolling tool 30 against the surface of the workpiece 22 with a predetermined normal force and translate the roller 44 relative to the surface of the workpiece 22 to produce plastic deformation of the workpiece surface and near-surface region within a depth of up to about 2.0 mm, and particularly in the depth region of about 1.6 mm to 2.0 mm.

The concurrent application of electrical current and the plastic deformation produced by the deep rolling creates an electroplastic effect (EPE) at the surface and within the near surface of the workpiece 22. As stated herein, the EPE produces a reduction in flow stress and an increase in plasticity (i.e., a reduction in deformation resistance) that facilitates the deep rolling, and also produces a refined grain structure in the workpiece metal at the surface and within the near-surface region with an increase in dislocation sources and tangles. Also as stated herein, the present disclosure deep rolling/ electrical assist process is understood to produce the refined grain structure and increased dislocation sources and tangles deeper into the respective near-surface region relative to that produced by deep rolling alone.

The refined grain structure and increased dislocation sources and tangles, in turn, result in an increased amount of residual compressive stress at the surface and within the near-surface regions. The increased amount of residual compressive stress produces enhanced fatigue strength; e.g., by inhibiting small crack initiation and/or propagation.

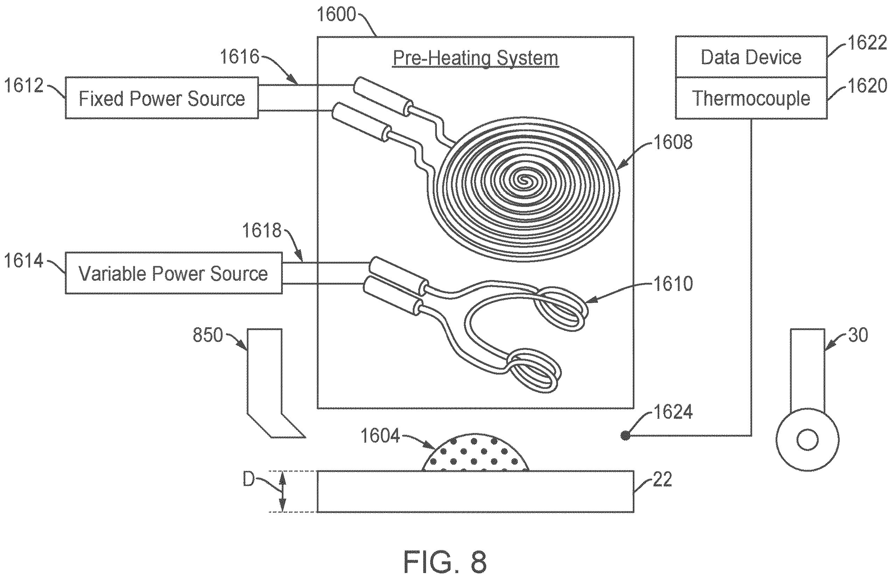

Figure 8 depicts a block diagram of a pre-heating system 1600 for use with the system 20 according to the disclosed embodiments. The disclosure of Figure 16 may refer to Figures 1-7 for illustrative purposes, but is not limited to the embodiments disclosed in these figures. Pre-heating system 1600 includes localized heat induction coils 1608 and 1610 that are held close to the area to be repaired on the repair surface of workpiece 22.

Material depositor 850 may be a powder sprayer that deposits metallic powder 1604 onto workpiece 22 for the DED/deep rolling process. In some embodiments, metallic powder 1604 is comprised of MAR-M-247 alloy powder. The DED path generated as disclosed above may be fed into system controller 34. Pre-heating system 1600 is used to pre-heat those regions of repair surface of workpiece 22 that is to be repaired according to the disclosed embodiments. After heating the surface, metallic powder 1604 is deposited and worked using deep rolling tool 30, as disclosed above.

Pre-heating system 1600 includes a uniform heating induction coil 1608. Coil 1608 is coupled to fixed frequency RF power source 1612. Power source 1612 may be operated at a fixed frequency to apply uniform heating from coil 1608 to a repair surface of workpiece 22. Power source 1612 is coupled to coil 1608 using connectors 1616. When power is applied to coil 1608, heat is generated by the coil within pre-heating system 1600. The amount of heat generated may be fixed as the frequency of the power applied to coil 1608 is fixed. This frequency may range between 1 kHz to 1000 MHz, with 1kHz to 100 kHz preferred for uniform heating. Moreover, the frequency of used for pre-heating may be varied in time to establish a gradient in heating so as to alleviate the build up of stress caused by the materials coefficient of thermal expansion.

Pre-heating system 1600 also includes localized heating induction coil 1610. Coil 1610 is coupled to variable frequency RF power source 1614. Power source 1614 may be operated at a variable frequency to apply variable heating from coil 1610 to workpiece 22. Coil 1610 may be movable within pre-heating system 1600 to be moved closer to repair surface 1602. The amount of heat generated by coil 1610 may vary as the frequency of the power applied to the coil is varied. The frequency may range between 1 kHz to 5000 MHz, with a preferred range for coil 1610 in the range 100 kHz to 500 MHz. As stated in this paragraph, frequency variation may be used along with radio frequency intensity to change the highly heated region in both depth and with time.

Pre-heating system 1600 may pre-heat the repair surface 1602 to a specified temperature up to 800 degrees Celsius. The controller 34 may control pre-heating system 1600 to heat repaired surface 1602 to a depth D based on a function using parameters captured to the scanning processes disclosed above. The power from power source 1614 to coil 1610 may be varied to pre-heat the repair surface of workpiece 22 to depth D, which is greater than the deposited layer thickness. Use of pre-heating system 1600 during the application of the compression load would support the reduction of the 1100 degree Celsius needed to eliminate hot cracking when using MAR-M-247 alloys and keeping the gamma prime percentage in the alloy constant, or at least not reduced.

The disclosed embodiments also may use thermocouple 1620 and thermocouple data device 1622. Thermocouple 1620 may use a sensor 1624 that detects temperatures. It may detect temperatures of the heating at repair surface provided by pre-heating system 1600. Thermocouple data device 1622 may receive detected temperatures from thermocouple 1620. Data device 1622 may act as a data logger that provides the relative time of minimum, maximum, and average temperature measurements for monitoring to make sure that pre-heating system 1600 complies with the regulations for using system 22. Further, the disclosed embodiments can vary the temperature using coil 1610 to vary the frequency of the power applied thereto.

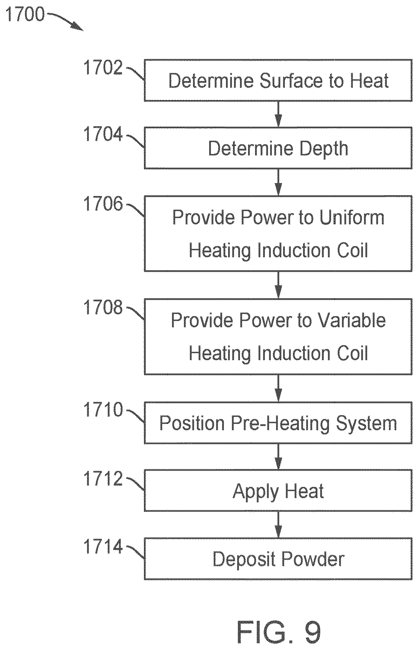

Figure 17 depicts a flowchart 1700 for using pre-heating system 1600 according to the disclosed embodiments. Flowchart 1700 may refer to Figures 1A-16 for illustrative purposes. Flowchart 1700, however, is not limited to the embodiments disclosed by Figures 1A-16.

Step 1702 executes by determine the surface of the part to be repaired. The disclosed embodiments may use the scanned data of the part and compare it with a CAD model of the part to determine regions of interest that have damage, as disclosed above. Step 1704 executes by determining a depth of the part, or repair surface 1602, to be heated to the desired temperature, as disclosed above. Various parameters may be used to determine the depth to be heated as a function of both the DED process parameters (producing deposited layer depth) and the deep rolling load identifying the reduction of the pre-heated temperature to eliminate hot cracking.

Step 1706 executes by providing power to uniform heating induction coil 1608. The power provided by fixed power source 1612 causes coil 1608 to generate a uniform temperature within pre-heating system 1600. Step 1708 executes by providing power to localized heating induction coil 1610. The power provided by variable power source 1614 causes coil 1610 to generate a variable temperature within pre-heating system 1600 based on the frequency provided. The combination of coil 1608 and coil 1610 allows pre-heating system 1600 to vary the temperature generated in a more efficient manner as coil 1608 provides a base level of heat that is then varied using coil 1610. Further, coil 1610 is local to workpiece 22 to provide the varied heat as needed. In some embodiments, only one coil may be used in pre-heating system 1600, such as localized heat induction coil 1610.

Step 1710 executes by positioning pre-heating system 1600 over the damaged region of repair surface 1602. The localized heating induction coil 1610 may be position closer to the repair surface of workpiece 22 than uniform heating induction coil 1608 to vary the heat applied to the repair surface. Step 1712 executes by applying heat to the repair surface of workpiece 22 using pre-heating system 1600 with coils 1608 and 1610. Step 1714 executes by depositing metallic powder 1604 onto the heated surface of workpiece 22. The metallic powder 1604 may include a MAR-M-247 alloy powder.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method for repairing a part (22) using a hybrid pre-heated directed energy deposition (DED) and deep rolling process, the method comprising:
identifying a region of interest of the part (22);
pre-heating the region of interest using a pre-heating system (1600) having at least one induction coil (1608, 1610) to generate heat at a temperature by:
applying power to the at least one induction coil (1608,1610); and
positioning the pre-heating system (1600) at the region of interest;
depositing a metallic powder (1604) at the pre-heated region of interest;
solidifying and fusing the metallic powder (1604) into a layer with a directed energy deposition to define the part (22); and
deep rolling the solidified layer of the metallic powder (1604) to obtain a desired microstructure.

2. The method of claim 1, wherein the at least one induction coil (1608, 1610) includes a uniform heating induction coil (1608) and a localized heating induction coil (1610), wherein the localized heating induction coil (1610) receives variable power to vary the temperature of the heat.

3. The method of claim 1, wherein the at least one induction coil (1608, 1610) includes a uniform heating induction coil (1608) or a localized heating induction coil (1610).

4. The method of claim 1, wherein the at least one induction coil (1608) includes a uniform heating induction coil (1608) coupled to a fixed power source (1612).

5. The method of claim 1 or 4, wherein the at least one induction coil (1610) includes a localized heating induction coil (1610) coupled to a variable power source (1614).

6. The method of claim 1, wherein the at least one induction coil (1608) includes a uniform heating induction coil (1608), wherein a frequency, the power, or a position of the uniform heating induction coil (1608) is varied.

7. The method of claim 1 or 6, wherein the at least one induction coil (1610) includes a localized heating induction coil (1610), wherein a frequency, the power, or a position of the localized heating induction coil (1610) is varied.

8. The method of any preceding claim, further comprising pre-heating the solidified layer of the metallic powder (1604) prior to depositing a subsequent amount of the metallic powder (1604).

9. The method of any preceding claim, further comprising
scanning the part (22) with a scanner (310) of an inspection system (300); and
determining the region of interest based on damage detected using a model of the scanned part (22).

10. The method of any preceding claim, wherein the metallic powder (1604) includes an MAR-M-247 alloy material.

11. A method for repairing a part (22) having damage, the method comprising:
scanning the part (22) using a scanning process to generate a scanned model, wherein the scanned model indicates the damage to the part (22);
comparing the scanned model to an original model of the part (22) to indicate a region of interest on the part (22) having the damage;
identifying the region of interest on the part (22) within an inspection system (300);
placing the part in a repair system (230) having a deep rolling tool (30);
pre-heating the region of interest using a pre-heating system (1600) of the repair system (230) having at least one induction coil (1608, 1610) to generate heat at a temperature by:
applying power to the at least one induction coil (1608, 1610); and
positioning the pre-heating system (1600) at the region of interest;
depositing a metallic powder (1604) at the pre-heated region of interest;
solidifying and fusing the metallic powder (1604) into a layer with a directed energy deposition to define the part (22); and
deep rolling using the deep rolling tool (30) to work the solidified layer of the metallic powder (1604) to obtain a desired microstructure.

12. The method of claim 11, wherein one or more of:
the at least one induction coil (1608, 1610) includes a uniform heating induction coil (1608) and a localized heating induction coil (1610), wherein the localized heating induction coil (1610) receives variable power to vary the temperature of the heat;
the at least one induction coil (1608, 1610) includes: a uniform heating induction coil (1608), optionally coupled to a fixed power source (1612); or a localized heating induction coil (1610), optionally coupled to a variable power source (1614); and
the metallic deposition material (1604) is a nickel alloy, optionally including a MAR-M-247 alloy.

13. A system (250) to repair a part (22), the system comprising:
a repair system (230) to repair the part (22) on a surface at the region of interest;
a pre-heating system (1600) of the repair system (230) having at least one induction coil (1608, 1610) to generate heat at a temperature on the surface at the region of interest;
a material depositor (850) to deposit an amount of metallic powder (1604) on the pre-heated surface of the part (22) at the region of interest;
an energy directing device of the repair system (230) to solidify and fuse the amount of the metallic powder (1604) into a layer with a directed energy deposition to define the part (22); and
a machine tool to deep roll the solidified layer of the amount of the metallic powder (1604) to obtain a desired microstructure.

14. The system of claim 13, wherein the at least one induction coil (1608, 1610) includes:
a uniform heating induction coil (1608) to generate a fixed amount of heat for the temperature provided by the pre-heating system (1600); and
a localized heating induction coil (1610) to generate a variable amount of heat for the temperature provided by the pre-heating system (1600).

15. The system of claim 13 or 14, wherein the metallic powder (1604) includes a MAR-M-247 alloy powder.
